# EUROPÄISCHE PATENTANMELDUNG

(11) **EP 2 905 555 A1**
(43) Veröffentlichungstag der Anmeldung: **12.08.2015**
(21) Anmeldenummer: 15152855.1
(22) Anmeldetag: 28.01.2015
(51) Int. Cl.: F24J 2/05, F24J 2/24, F24J 2/46

(54) **Solarkollektorröhre und Solarkollektor mit mehreren Solarkollektorröhren**

(30) Priorität: 07.02.2014 DE 202014001094 U
(71) Anmelder: Bürger, Thomas, 37235 Hessisch Lichtenau (DE)
(72) Erfinder: Bürger, Thomas, 37235 Hessisch Lichtenau (DE)
(74) Vertreter: Walther, Walther & Hinz GbR

(57) **Zusammenfassung**

Gegenstand der Erfindung ist eine Solarkollektorröhre (2) zur Erwärmung von Gasen, umfassend zwei zur Bildung einer Rohrwandung unter Bildung eines Zwischenraumes beabstandet zueinander angeordnete Rohre (21, 22), wobei das äußere Rohr (21) aus Glas, einem lichtdurchlässigen Kunststoff oder Verbundwerkstoff und das innere Rohr (22) aus Metall oder einem Kunst- bzw. Verbundwerkstoff ausgebildet ist, wobei die Solarkollektorröhre (2) zumindest im Bereich des inneren Rohres 22 zu beiden Enden zur Durchführung des erwärmten Gases geöffnet ist.

## Beschreibung

Die Erfindung betrifft eine Solarkollektorröhre und Solarkollektor mit mehreren Solarkollektorröhren.

Solarkollektorröhren sind aus dem Stand der Technik hinreichend bekannt. So ist zum Beispiel aus der DE 100 02 929 A1 eine Solarkollektorröhre bekannt, mit welcher Luft oder andere Gase so hoch erhitzt werden, dass ein Medium mit ausreichender Temperatur zur Verfügung steht. Im Einzelnen ist hierbei eine doppelwandige Röhre vorgesehen, die mittig ein Tauchrohr aufweist, wobei zwischen Tauchrohr und doppelwandiger Röhre ein Abstand besteht, wobei in diesem durch den Abstand erzeugten Raum ein Geflecht als Absorber angeordnet ist. Durch diese Absorberschicht wird das zu erwärmende Medium geleitet, wobei im Innern der Röhre das in der Zwischenwand erwärmte Medium zurückgeführt wird. Das heißt, die bekannte Solarkollektorröhre arbeitet nach dem Gegenstromprinzip. Werden an einer Leitung mehrere solche Solarkollektorröhren angeordnet, so stellt dies im Prinzip eine Parallelschaltung mehrerer Solarkollektorröhren zur Erzeugung eines entsprechend größeren Volumenstromes dar. Das heißt, eine Parallelschaltung mehrerer solcher Solarkollektorröhren erfolgt nicht vor dem Ziel zur Erhöhung der Ausgangstemperatur des erwärmten Gases, sondern lediglich vor dem Ziel der Erhöhung des Volumens des austretenden Gases mit einer bestimmten Temperatur. Durch eine Reihenschaltung kann auch eine Temperaturerhöhung erzielt werden.

Aus der DE 198 21 137 B4 ist ein Röhrenkollektor bekannt, der der Erwärmung von Flüssigkeit, insbesondere Wasser, dient. Hierzu ist ein sogenanntes Hüllrohr vorgesehen, wobei in dem Hüllrohr ein Absorberrohr beabstandet zum Hüllrohr angeordnet ist. In dem Hüllrohr befindet sich ein drittes Rohr, das sogenannte Wärmeleitrohr. Durch das Innere dieses Wärmeleitrohres wird Kaltwasser transportiert, das sich im Laufe der Zeit bei seinem Weg durch den Röhrenkollektor erwärmt, am Ende des Wärmeleitrohres austritt, und durch den zwischen der Außenmantelfläche des Wärmeleitrohres und der Innenmantelfläche des Absorberrohres gebildeten Abstand im Gegenstrom zu einem Warmwasserrücklauf geführt wird. Dieser Röhrenkollektor stellt sich als eine in sich geschlossene Einheit dar, mit der in Abhängigkeit von der Strahlungsintensität eine bestimmte Menge an Flüssigkeit in einer bestimmten Zeit auf eine bestimmte Temperatur erwärmt werden kann.

Des Weiteren sind aus dem Stand der Technik sogenannte Luftkollektoren bekannt, die als Flachkollektoren ausgebildet sind. Solche Flachkollektoren vertreibt zum Beispiel die Firma Grammer Solartechnik. Bei diesem Luftkollektor ist eine Vielzahl von im Wesentlichen rechteckigen Rohren vorgesehen, die nebeneinander angeordnet einen Kollektor bilden. Die Rohre bestehen aus Aluminium oder Kunststoff und sind zu beiden Enden hin offen. Der Kollektor ist auf seiner Oberseite mit einer Abdeckung aus einem Einscheibensicherheitsglas versehen, wobei der Kollektor auf seiner Unterseite einen Träger in Form einer Platte aufweist, wobei zwischen dem plattenförmigen Träger und den einzelnen Absorberröhren eine Dämmschicht vorgesehen ist. Zur Erzeugung von Warmluft wird an einem Ende kalte Luft zugeführt, und am anderen Ende die Warmluft abgenommen. Derartige Kollektoren können in einer Mehrzahl hintereinander geschaltet werden, da diese Kollektoren stirnseitig jeweils einen Flanschrahmen aufweisen.

Der Nachteil solcher Grammer-Kollektoren besteht darin, dass diese bei verhältnismäßig hohem Gewicht und großer benötigter Fläche eine verhältnismäßig geringe Leistung bereitstellen. Insofern haben sich diese Kollektoren zur Anbringung auf Flachdächern von Industriebauten nicht durchgesetzt, eben weil das Gewicht im Verhältnis zur erzeugten Wärmemenge zu hoch ist.

Darüber hinaus sind Solarkollektorröhren aus Glas unter der Bezeichnung Sydney-Röhre bekannt. Hierbei handelt es sich um eine Röhre, die zwei beabstandet zueinander angeordnete Glaswände aufweist, wobei die eine innere Glaswand eine Absorberschicht besitzt. Derartige Sydney-Röhren dienen der Erwärmung von Flüssigkeiten insofern, als in der Sydney-Röhre ein weiteres Rohr angeordnet ist, das die Flüssigkeit aufnimmt. Eine solche Sydney-Röhre ist, da sie an einem Ende geschlossen ist, zur wirkungsvollen Erwärmung von Gasen nicht geeignet, da die Volumenströme zu gering sind.

Aus der EP 2 322 871 A ist eine Solarkollektorröhre bekannt, bei der sowohl das äußere als auch das innere Rohr aus Glas hergestellt sind. Da Glas eine bestimmte Mindestwandstärke aufweisen muss, damit es ausreichend stabil ist, ist ein Solarkollektor bestehend aus zwei beabstandet zueinander angeordneten Glasrohren verhältnismäßig schwer. Aufgrund der großen Temperaturdifferenz zwischen Außen- und Innenrohr besteht auch immer die Gefahr, dass das innere Rohr bricht.

Die der Erfindung zugrunde liegende Aufgabe besteht demzufolge darin, eine Solarkollektorröhre bereitzustellen, die zum einen leicht ist, und zum anderen einen hohen Wirkungsgrad im Hinblick auf die erzeugte Menge an erwärmtem Gas aufweist und darüber hinaus stabil ist.

Zur Lösung der Aufgabe wird eine Solarkollektorröhre zur Erwärmung von Gasen vorgeschlagen, die zwei zur Bildung einer Rohrwandung unter Bildung eines Zwischenraumes beabstandet zueinander angeordnete Rohre umfasst, wobei das äußere Rohr aus Glas, einem lichtdurchlässigen Kunststoff oder lichtdurchlässigen Verbundwerkstoff und das innere Rohr aus Metall oder einem Kunst- oder Verbundwerkstoff ausgebildet ist, wobei die Solarkollektorröhre zumindest in Bezug auf das innere Rohr zu beiden Enden zur Durchführung des zu erwärmenden Gases geöffnet ist.

Glasrohre müssen eine Mindeststärke von ca. 2 mm aufweisen, um die Bruchgefahr zu vermindern. Bedingt durch die Stärke des Glases ergibt sich ein hohes Gewicht. Ein Innenrohr aus z. B. Aluminium benötigt nur eine Wandstärke von ca. 0,5 mm. Bei etwa gleicher Dichte von Glas und Aluminium ergibt sich somit ein insgesamt geringeres Gewicht. Dadurch, dass weiterhin bei dem erfindungsgemäßen Solarkollektorrohr das innere Rohr zu beiden Enden hin offen ist, besteht die Möglichkeit der Durchführung des zu erwärmenden Gases mit der weiteren Möglichkeit, mehrere solche Solarkollektorröhren hintereinander zu schalten, um die Ausgangstemperatur weiter zu erhöhen. Zur Erzeugung eines höheren Volumens ist die Parallelschaltung mehrerer solcher Solarkollektorröhren möglich. Solche mit einem Innenrohr z. B. aus Aluminium hergestellten Solarkollektorröhren weisen ein verhältnismäßig geringes Gewicht bei einer hohen Leistungsausbeute auf, weshalb solche Solarkollektoren auch als Anlagen auf Dächern von Industrieanlagen aufgebaut werden können, um mithilfe der erwärmten Luft beispielsweise Industriehallen zu heizen oder Prozesswärme bereitzustellen.

Vorteilhafte Merkmale und Ausführungen der Erfindung ergeben sich aus den Unteransprüchen.

So ist insbesondere vorgesehen, dass die beiden Rohre, also Innen- und Außenrohr zum Abschluss des Zwischenraumes endseitig gasdicht verbunden sind. Dies kann z. B. dadurch geschehen, dass die beiden Rohre endseitig temperaturfest miteinander verklebt sind, wobei die Verklebung derart ist, dass eine unterschiedliche thermische Ausdehnung der beiden Glasrohre kompensiert werden kann. Denkbar ist hierbei eine hochtemperaturfeste Verklebung der beiden Rohre, beispielsweise durch einen Silikonklebstoff.

Zur Erhöhung der Temperatur in einer solchen Solarkollektorröhre weist das innere Rohr einen Absorber auf, insbesondere ist das Rohr mit einer Absorberschicht versehen. Im Einzelnen kann in diesem Zusammenhang vorgesehen sein, dass die Absorberschicht auf der Innenseite oder auf der Außenseite des inneren Rohres angeordnet ist. Ist die Absorberschicht auf der Außenseite des inneren Rohres angeordnet, so wird dies zur Folge haben, dass sich das innere Rohr z. B. aus Aluminium stark erhitzt, mithin auch entsprechend stärker ausdehnt, als das äußere Glasrohr. Andererseits kann die Absorberschicht bei einem inneren Rohr aus nicht lichtdurchlässigem Material, z. B. Aluminium, nur auf der Außenseite angebracht werden.

Wie bereits an anderer Stelle erläutert, kann eine Kompensation solcher unterschiedlicher Ausdehnungen aufgrund unterschiedlicher Temperaturen durch eine entsprechende Klebverbindung zwischen dem äußeren und dem inneren Glasrohr bewerkstelligt werden, es besteht allerdings auch die Möglichkeit, einen Kompensator einzusetzen, das heißt, dass das innere Rohr aus z. B. Aluminium wellig oder faltig oder mäanderförmig umlaufend in vorzugsweise einem Endbereich ausgebildet ist, um die Bewegung bei Wärmeausdehnung zuzulassen.

Darüber hinaus ist die Anordnung von Wärmeleitblechen in dem inneren Rohr an der Solarkollektorröhre vorgesehen. Das Wärmeleitblech, das in den unterschiedlichsten Ausprägungen in das innere Rohr der Solarkollektorröhre eingebracht werden kann, liegt vorzugsweise an der Innenwandung des inneren Rohres an. Es ist mit dem inneren Rohr verschweißt, verlötet oder liegt auch nur unter Druck an diesem an, in jedem Fall ist eine Kontaktierung wegen des Wärmeübergangs sinnvoll. Durch ein solches Wärmeleitblech wird die Fläche für den Wärmeübergang von dem inneren Rohr auf das durchströmte Gas vergrößert.

Um auch in der kalten Jahreszeit eine Erwärmung der in einer solchen Solarkollektorröhre oder einer Vielzahl hintereinander geschalteter Solarkollektorröhren transportierten Luftmenge zu erreichen, ist vorgesehen, dass der Zwischenraum zwischen dem inneren Rohr und dem äußeren Rohr derart ausgebildet ist, dass die Verlustwärme durch Strahlung reduziert ist. Dies kann zum einen dadurch erreicht werden, dass der Raum zwischen den beiden Rohren also Außen- und Innenrohr evakuiert ist, oder ein nicht wärmeleitfähiges Gas eingefüllt wird, zum Beispiel Xenon oder Argon.

Für den Fall, dass nur niedrige Temperaturen benötigt werden, kann auch Luft im Zwischenraum belassen werden. Insofern kann die Röhre den entsprechenden Temperaturbedürfnissen angepasst werden.

Gegenstand der Erfindung ist ebenfalls ein Solarkollektor mit mehreren Solarkollektorröhren der zuvor beschriebenen Art, wobei die mehreren Solarkollektorröhren durch Muffen miteinander in Verbindung stehen. Es wurde bereits an anderer Stelle dargelegt, dass bei der Erwärmung der Solarkollektorröhren mit einer Ausdehnung aufgrund von Temperaturerhöhung zu rechnen ist. Insofern ist im Einzelnen für die Verbindung der Solarkollektorröhren untereinander vorgesehen, dass die Muffen, die aus einem Elastomer hergestellt sind, im Querschnitt T-förmig ausgebildet sind, wobei sich der Steg der Muffe zwischen den stirnseitigen Rohrwandungen zweier aneinander anschließender Solarkollektorröhren befindet. Der Schenkel der Muffe umgibt die Wandung der jeweiligen Solarkollektorröhre manschettenartig, das heißt, eine solche Muffe wird zunächst auf eine Solarkollektorröhre aufgeschoben, bis sie mit ihrem Steg an der Stirnseite der Solarkollektorröhre anliegt, wobei alsdann die andere Solarkollektorröhre ebenfalls in den offenen Schenkel der Muffe eingeschoben wird. Die Höhe des Steges ist hierbei derart gewählt, dass dieser in etwa der Wandungsstärke der beiden die Wandung bildenden inneren und äußeren Rohre entspricht, zzgl. der Abstand zwischen den beiden Rohren.

Anhand der Zeichnungen wird die Erfindung nachstehend beispielhaft näher erläutert:
- Fig. 1: zeigt einen Solarkollektor in einer perspektivischen Darstellung;
- Fig. 2: zeigt einen Ausschnitt aus Fig. 1 in einer ersten Ausführungsform in vergrößerter Darstellung im Schnitt;
- Fig. 3: zeigt einen Ausschnitt aus Fig. 1 in einer weiteren Ausführungsform in vergrößerter Darstellung im Schnitt.
- Fig. 4: zeigt einen Ausschnitt aus Fig. 1 in einer dritten Ausführungsform in vergrößerter Darstellung im Schnitt;
- Fig. 5a - 5c: zeigen verschiedene Ausführungsformen eines Solarkollektorrohres mit unterschiedlichen ausgebildeten Wärmeleitblechen;
- Fig. 6: zeigt am Beispiel der Ausführungsform von Fig. 2 das Innenrohr mit einem Kompensator.

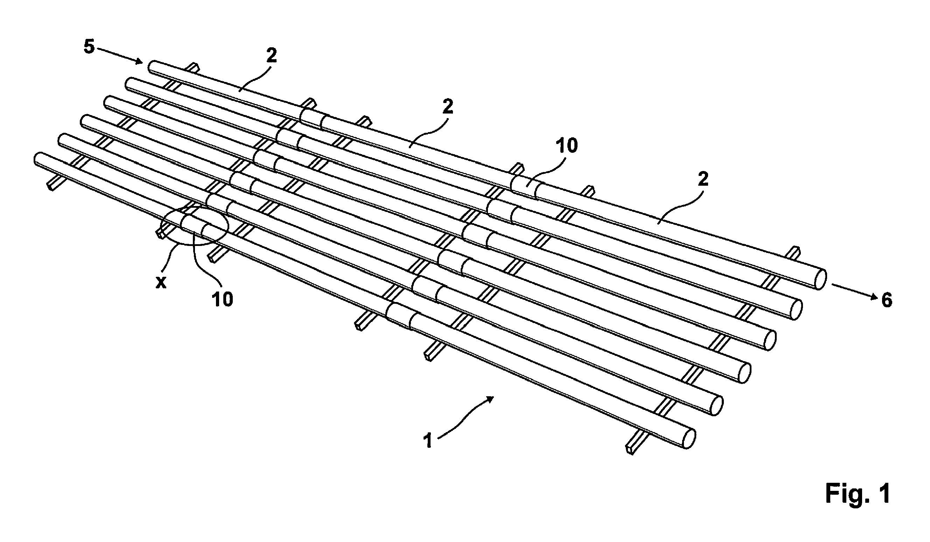

Der in Figur 1 mit 1 bezeichnete Solarkollektor umfasst mehrere parallel zueinander verlaufende Solarkollektorröhren 2, wobei die einzelnen Röhren 2 durch Muffen 10 miteinander verbunden sind. Die Solarkollektorröhren 2 ziehen von der einen Seite (Pfeil 5) die kühle Luft an und stoßen am Ende (Pfeil 6) die erwärmte Luft ab, wobei diese Warmluft zur Beheizung zum Beispiel einer Fabrikhalle dienen kann.

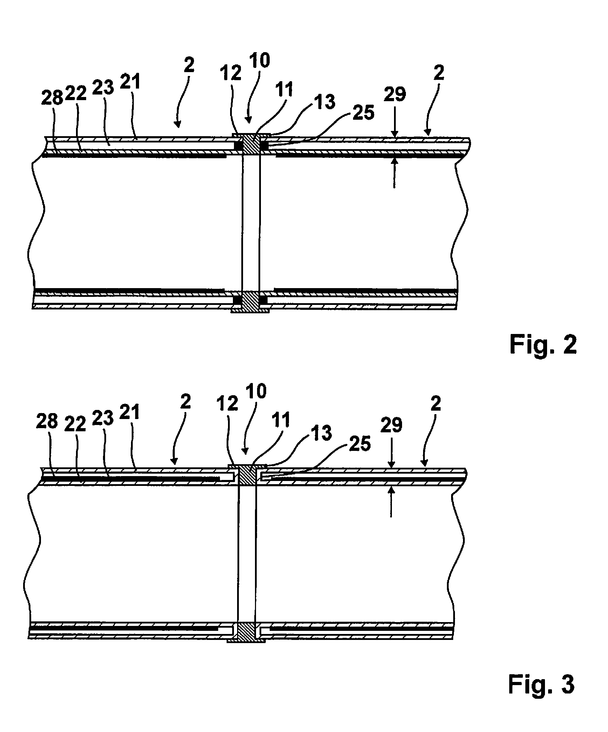

Gegenstand der Erfindung ist nunmehr die Ausbildung der einzelnen Solarkollektorröhren (Fig. 2 bis Fig. 5). Eine solche mit 2 bezeichnete Solarkollektorröhre umfasst die beiden ineinander gelagerten Rohre 21 und 22, die beabstandet zueinander angeordnet sind. Der Zwischenraum 23 zwischen den beiden Rohren wird endseitig verschlossen, entweder durch eine temperaturfeste Verklebung 25, beispielsweise mithilfe eines Silikonklebers, oder aber durch eine Verschmelzung der Enden der beiden Rohre 21, 22 wie in Fig. 3 schematisch dargestellt, wenn beide Rohre aus dem gleichen Material hergestellt sind. Bei der Darstellung gemäß Fig. 2 ist die mit 28 bezeichnete Absorberschicht auf der Innenseite des inneren Rohres 22 angeordnet, wohingegen bei der Ausführungsform gemäß Fig. 3 die Absorberschicht 28 auf der Außenseite des inneren Rohres 22 zu finden ist.

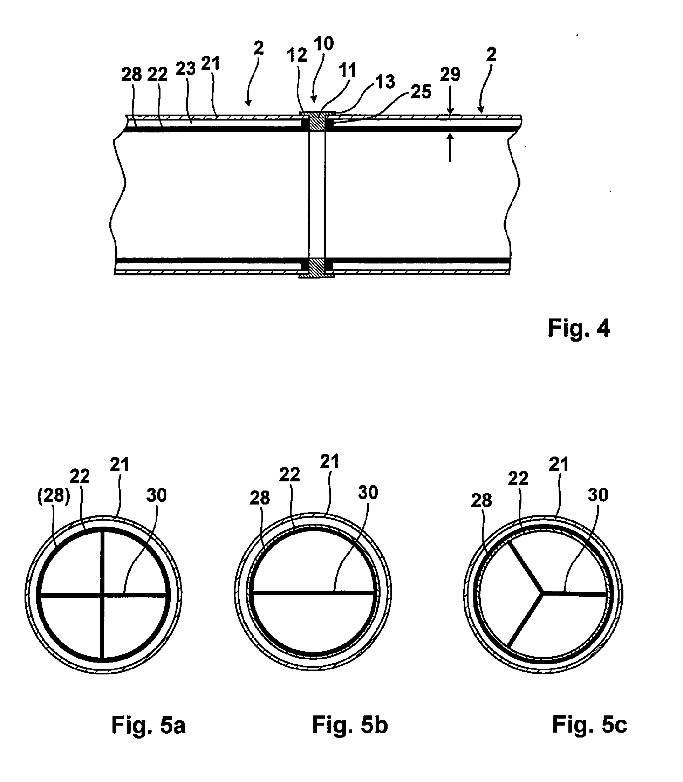

Denkbar ist gemäß Fig. 4 auch der Einschub eines als Absorber ausgebildeten inneren Rohres 22 z. B. aus Verbundwerkstoff. Der Absorber kann jede beliebige Form aufweisen. Die Verbindung zwischen den beiden Rohren kann auch hier durch einen temperaturfesten Silikonkleber 25 erfolgen.

Für die Verbindung einer Reihenschaltung von Solarkollektoren mit Solarkollektorröhren ist eine Muffe 10 vorgesehen. Die mit 10 bezeichnete Muffe erfasst die beiden in Reihe geschalteten Solarkollektorröhren 2 zzgl. des Abstands zwischen den beiden Rohren. Die Muffe 10 umfasst den Steg 11, sowie die beiden Schenkel 12 und 13. Die Höhe des Steges 11 entspricht der Wandungsstärke 29 der durch die beiden Glasrohre 21 und 22 gebildeten Solarkollektorröhre 2. Die Schenkel 12 und 13 der Muffe 10 erfassen die jeweilige Solarkollektorröhre 2 auf ihrem Außenmantel, wie sich dies aus den Darstellungen gemäß den Figuren 2 bis 5 ergibt.

Aus Fig. 5a bis 5c ergibt sich darüber hinaus die Anordnung eines Wärmeleitblechs 30 in dem Innenrohr 22. Dies kann die unterschiedlichsten Formen aufweisen und mit der Innenwandung des inneren Rohrs verbunden sein, z. B. verschweißt oder es liegt an der Innenwandung unter leichtem Druck an, sodass es sich nicht verschieben kann.

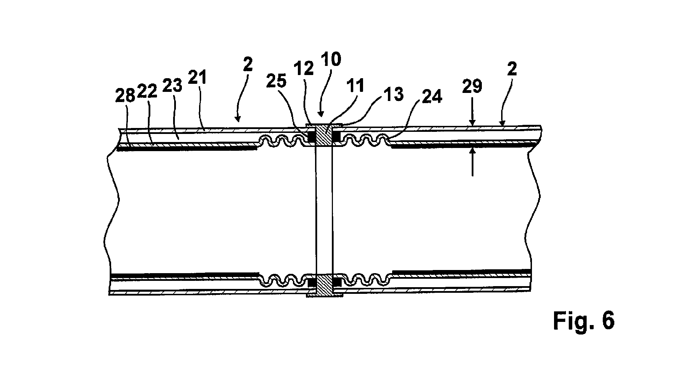

Aus der Fig. 6 ergibt sich die Ausbildung eines inneren Rohres 22 mit einem Kompensator 24, der wellenförmig, faltenartig oder auch mäanderförmig ausgebildet sein kann. Das innere Rohr 22 wird wärmer, weshalb es sich gegenüber dem äußeren Rohr 21 stärker ausdehnt. Zur Kompensation der unterschiedlichen Längenausdehnung ist der Kompensator 24 vorgesehen, der sich vorzugsweise im Endbereich des inneren Rohres befindet.

Ein in der oben beschriebenen Weise ausgebildeter Solarkollektor zeichnet sich durch ein relativ geringes Gesamtgewicht aus, bei gleichzeitig hoher Leistungsabgabe. So ist zum Beispiel ein Solarkollektor der in Fig. 1 dargestellten Art mit einer Fläche von 25 m² in der Lage, bis zu 23 kw (je nach Isolierung) Leistung zu erzeugen; dies bei einem Gewicht von etwa 310 kg. Das heißt, dass ein solcher Solarkollektor durchaus auch auf Flachdächern mit verhältnismäßig geringer zulässiger Dachlast montiert werden kann, und auch eine ausreichende Wärmeleistung zur Verfügung gestellt wird, um Fabrikhallen zu beheizen. Verwendet werden kann die erwärmte Luft nicht nur zu Heizzwecken, sondern auch als Prozesswärme.

### Bezugszeichenliste:

- 1: Solarkollektor
- 2: Solarkollektorröhre
- 10: Muffe
- 11: Steg
- 12: Schenkel
- 13: Schenkel
- 21: Rohr
- 22: Rohr
- 23: Zwischenraum
- 24: Kompensator
- 25: Verklebung
- 28: Absorberschicht
- 29: Wandungsstärke
- 30: Wärmeleitblech

## Patentansprüche

1. Solarkollektorröhre (2) zur Erwärmung von Gasen, umfassend zwei zur Bildung einer Rohrwandung unter Bildung eines Zwischenraumes beabstandet zueinander angeordnete Rohre (21, 22), wobei das äußere Rohr (21) aus Glas, einem lichtdurchlässigen Kunststoff oder Verbundwerkstoff und das innere Rohr (22) aus Metall oder einem Kunst- bzw. Verbundwerkstoff ausgebildet ist, wobei die Solarkollektorröhre (2) zumindest im Bereich des inneren Rohres 22 zu beiden Enden zur Durchführung des erwärmten Gases geöffnet ist.

2. Solarkollektorröhre nach Anspruch 1,
**dadurch gekennzeichnet,**
**dass** die beiden Glasrohre (21, 22) zum Abschluss des Zwischenraumes endseitig gasdicht verbunden sind.

3. Solarkollektorröhre nach einem der voranstehenden Ansprüche,
**dadurch gekennzeichnet,**
**dass** die Solarkollektorröhre (2) einen Absorber (28) aufweist.

4. Solarkollektorröhre nach einem der voranstehenden Ansprüche,
**dadurch gekennzeichnet,**
**dass** das innere Rohr (22) aus einem Absorbermaterial ausgebildet ist.

5. Solarkollektorröhre nach einem der voranstehenden Ansprüche,
**dadurch gekennzeichnet,**
**dass** der Absorber (28) als Beschichtung ausgebildet ist.

6. Solarkollektorröhre nach einem der voranstehenden Ansprüche,
**dadurch gekennzeichnet,**
**dass** die Absorberschicht (28) auf der Außenseite des inneren Rohres (22) angeordnet ist.

7. Solarkollektorröhre nach einem der voranstehenden Ansprüche,
**dadurch gekennzeichnet,**
**dass** die beiden Rohre (21, 22) zumindest an einem Ende miteinander verbunden sind.

8. Solarkollektorröhre nach einem der voranstehenden Ansprüche,
**dadurch gekennzeichnet,**
die beide Rohre (21, 22) miteinander temperaturfest verklebt sind.

9. Solarkollektorröhre nach einem der voranstehenden Ansprüche,
**dadurch gekennzeichnet,**
**dass** im Hohlraum des inneren Rohres ein Wärmeleiter (30) zur Übertragung der Wärme auf das durchgeführte Gas angeordnet ist.

10. Solarkollektorröhre nach einem der voranstehenden Ansprüche,
**dadurch gekennzeichnet,**
**dass** der Zwischenraum zwischen den beiden Rohren (21, 22) evakuiert ist.

11. Solarkollektorröhre nach einem der voranstehenden Ansprüche,
**dadurch gekennzeichnet,**
**dass** der Zwischenraum zwischen den beiden Rohren (21, 22) mit einem gering wärmeleitfähigen Gas, z. B. Argon, gefüllt ist.

12. Solarkollektorröhre nach einem der voranstehenden Ansprüche,
**dadurch gekennzeichnet,**
**dass** das innere Rohr (22) einen Kompensator (24) aufweist.

13. Solarkollektorröhre nach Anspruch 12,
**dadurch gekennzeichnet,**
**dass** der Kompensator (24) wellen-, falten- oder mäanderförmig ausgebildet ist.

14. Solarkolektor mit mehreren Solarkollektorröhren gemäß einem der Ansprüche 1 bis 13,
wobei die mehreren Solarkollektorröhren (2) durch Muffen (10) miteinander verbunden sind.

15. Solarkollektorröhre nach Anspruch 14,
**dadurch gekennzeichnet,**
**dass** die Muffen (10) im Querschnitt T-förmig ausgebildet sind.

16. Solarkollektorröhre nach einem der Ansprüche 14 und 15,
**dadurch gekennzeichnet,**
**dass** sich der Steg (11) der Muffe (10) zwischen der Rohrwandung zweier aneinander anschließender Solarkollektorröhren (2) befindet, wobei die Schenkel (12, 13) der Muffe die Wandung der jeweiligen Solarkollektorröhre manschettenartig umgeben.

17. Solarkollektorröhre nach einem der Ansprüche 14 bis 16,
**dadurch gekennzeichnet,**
**dass** die Muffe (10) aus einem Elastomer oder einem anderen Kunst- oder Verbundwerkstoff gebildet ist.
